(19) Europäisches Patentamt
European Patent Office
Office européen des brevets

(11) **EP 4 494 195 B1**

(12) **EUROPEAN PATENT SPECIFICATION**

(45) Date of publication and mention of the grant of the patent:
**03.06.2026 Bulletin 2026/23**

(21) Application number: **23709729.0**

(22) Date of filing: **10.03.2023**

(51) International Patent Classification (IPC):
***H01M 4/36*** *(2006.01)* ***H01M 4/505*** *(2010.01)*
***H01M 4/525*** *(2010.01)* ***H01M 4/62*** *(2006.01)*
***H01M 10/052*** *(2010.01)*

(52) Cooperative Patent Classification (CPC):
**H01M 4/36; H01M 4/505; H01M 4/525; H01M 4/62; H01M 10/052;** Y02E 60/10

(86) International application number:
**PCT/EP2023/056190**

(87) International publication number:
**WO 2023/174824 (21.09.2023 Gazette 2023/38)**

(54) **PROCESS FOR MAKING A COATED ELECTRODE ACTIVE MATERIAL**

VERFAHREN ZUR HERSTELLUNG EINES BESCHICHTETEN ELEKTRODENAKTIVMATERIALS

PROCÉDÉ DE FABRICATION D’UN MATÉRIAU ACTIF D’ÉLECTRODE REVÊTU

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.03.2022 EP 22162239**

(43) Date of publication of application:
**22.01.2025 Bulletin 2025/04**

(73) Proprietor: **BASF SE**
**67056 Ludwigshafen am Rhein (DE)**

(72) Inventors:
- **HAN, Zhenji**
  **Amagasaki, Hyogo 660-0083 (JP)**
- **ERK, Christoph**
  **67056 Ludwigshafen am Rhein (DE)**
- **MICHEL, Kathrin**
  **67056 Ludwigshafen am Rhein (DE)**
- **SIOSS, James A**
  **Beachwood, Ohio 44122 (US)**

(74) Representative: **BASF IP Association**
**BASF SE**
**GBI - Z078**
**67056 Ludwigshafen (DE)**

(56) References cited:
**WO-A1-2022/039576 US-A1- 2021 151 754**
**US-A1- 2021 367 222**

- **EKAR JERNEJ ET AL: "ToF-SIMS Depth Profiling of Metal, Metal Oxide, and Alloy Multilayers in Atmospheres of H 2 , C 2 H 2 , CO, and O 2", JOURNAL OF THE AMERICAN SOCIETY FOR MASS SPECTROMETRY, vol. 33, no. 1, 22 December 2021 (2021-12-22), US, pages 31 - 44, XP093046988, ISSN: 1044-0305, Retrieved from the Internet <URL:https://pubs.acs.org/doi/pdf/10.1021/jasms.1c00218> DOI: 10.1021/jasms.1c00218**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 494 195 B1

## Description

The present invention is directed towards a process for the manufacture of a coated cathode active material comprising the steps of

(a) providing a particulate electrode active material according to general formula $Li_{1+x}TM_{1-x}O_2$, wherein TM is a combination according to general formula (I),

$$(Ni_aCo_bMn_c)_{1-d}M_d \qquad (I)$$

with

a being in the range of from 0.86 to 0.94,
b being zero or in the range of from 0.01 to 0.1,
c being in the range of from 0.01 to 0.1, and
d being in the range of from zero to 0.1,
M is at least one of Al, Mg, Nb, Ti, Mo, W and Zr, and

$$a + b + c = 1,$$

and x is in the range of from zero to 0.05,

(b) treating said particulate electrode active material with an aqueous medium that contains a compound of Al or Sb selected from AlOOH, $Al_2O_3$, $Al_2(SO_4)_3$, and $Sb_2O_3$,
(c) removing the water from step (b) at least partially,
(d) optionally, treating the mixture from step (c) thermally,
(e) adding at least one compound selected from compounds of Al or Sb or B to the solid material obtained from step (d), if applicable, or from step (c), respectively, thereby depositing at least one element selected from on the surface of said particulate electrode active material, wherein the element deposited in step (e) is different from the element deposited in step (b), respectively, and
(f) treating the residue obtained from step (e) thermally.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

Currently, a certain interest in so-called Ni-rich electrode active materials may be observed, for example electrode active materials that contain 75 mole-% or more of Ni, referring to the total TM content.

One problem of lithium ion batteries - especially of Ni-rich electrode active materials - is attributed to undesired reactions on the surface of the electrode active materials. Such reactions may be a decomposition of the electrolyte or the solvent or both. It has thus been tried to protect the surface without hindering the lithium exchange during charging and discharging. Examples are attempts to coat the electrode active materials with, e.g., aluminium oxide or calcium oxide, see, e.g., US 8,993,051.

Other theories assign undesired reactions to free LiOH or $Li_2CO_3$ on the surface. Attempts have been made to remove such free LiOH or $Li_2CO_3$ by washing the electrode active material with water, see, e.g., JP 4,789,066 B, JP 5,139,024 B, and US2015/0372300. However, in some instances it was observed that the properties of the resultant electrode active materials did not improve.

It was an objective of the present invention to provide a process for making Ni-rich electrode active materials with excellent electrochemical properties. It was also an objective to provide Ni-rich electrode active materials with excellent electrochemical properties, especially a low resistance growth upon cycling.

Accordingly, the process defined at the outset has been found, hereinafter also referred to as "inventive process". The inventive process comprises the following steps:

(a) providing a particulate electrode active material according to general formula $Li_{1+x}TM_{1-x}O_2$, wherein TM is a combination of metals according to formula (I),

$$(Ni_aCo_bMn_c)_{1-d}M_d \quad (I)$$

with

a being in the range of from 0.86 to 0.94,
b being zero or in the range of from 0.01 to 0.1,
c being in the range of from 0.01 to 0.1, and
d being in the range of from zero to 0.1,
M is at least one of Al, Mg, Nb, Ti, Mo, W and Zr, and

$$a + b + c = 1,$$

and Mn, and x is in the range of from zero to 0.05,

(b) treating said particulate electrode active material with an aqueous medium that contains a compound of Al or Sb selected from AlOOH, $Al_2O_3$, $Al_2(SO_4)_3$, and $Sb_2O_3$,
(c) removing the water from step (b) at least partially,
(d) optionally, treating the mixture from step (c) thermally,
(e) adding at least one compound selected from compounds of Al or Sb or B to the solid material obtained from step (d), if applicable, or from step (c), respectively, thereby depositing at least one element selected from on the surface of said particulate electrode active material, wherein the element deposited in step (e) is different from the element deposited in step (b), respectively, and
(f) treating the residue obtained from step (e) thermally.

The inventive process comprises at least five steps, (a), (b), (c), (e), and (f), in the context of the present invention also referred to as step (a) and step (b) and step (c) and step (e) and step (e), respectively. Steps (a) to (g) are performed subsequently. Step (d) is optional.

In step (a), the inventive process starts off from an electrode active material according to general formula $Li_{1+x}TM_{1-x}O_2$, wherein TM comprises Ni and, optionally, at least one transition metal selected from Co and Mn, and, optionally, at least one element selected from Al, Mg and Ba, and, wherein at least 50 mole-% of TM is Ni, preferably at least 75 mole-%, and x is in the range of from zero to 0.2. Said material is hereinafter also referred to as starting material.

In one embodiment of the present invention the starting material has an average particle diameter (D50) in the range of from 3 to 20 $\mu$m, preferably from 4 to 16 $\mu$m. The average particle diameter can be determined, e. g., by light scattering or LASER diffraction or electroacoustic spectroscopy. The particles are usually composed of agglomerates from primary particles, and the above particle diameter refers to the secondary particle diameter.

In one embodiment of the present invention, the starting material has a specific surface (BET), hereinafter also referred to as "BET surface", in the range of from 0.1 to 2.0 $m^2/g$. The BET surface may be determined by nitrogen adsorption after outgassing of the sample at 200°C for 30 minutes or more and beyond this accordance with DIN ISO 9277:2010.

In one embodiment of the present invention, the particulate material provided in step (a) has a moisture content in the range of from 20 to 2,000 ppm, determined by Karl-Fischer titration, preferred are 50 to 1,200 ppm.

The variable TM corresponds to general formula (I)

$$(Ni_aCo_bMn_c)_{1-d}M^1_d \quad (I)$$

with a + b + c = 1 and

a being in the range of from 0.6 to 0.99, preferably from 0.75 to 0.95, more preferably from 0.85 to 0.95,

b being zero or in the range of from 0.01 to 0.2, preferably from 0.025 to 0.2, more preferably from 0.025 to 0.1,

c being in the range of from zero to 0.2, preferably from 0.025 to 0.2, more preferably from 0.05 to 0.1,

d being in the range of from zero to 0.1, preferably from zero to 0.04,

$M^1$ is at least one of Al, Mg, Ti, Nb, Mo, W and Zr, preferably at least one of Al, Ti, Zr and W.

In one embodiment of the present invention, the variable c is zero, $M^1$ is Al, and d is in the range of from 0.01 to 0.05.

In one embodiment of the present invention TM corresponds to general formula (I) and x is in the range from zero to 0.2, preferably from zero to 0.1 and even more preferably 0.01 to 0.05.

In one embodiment of the present invention, TM is selected from $Ni_{0.6}Co_{0.2}Mn_{0.2}$, $Ni_{0.7}Co_{0.2}Mn_{0.1}$, $Ni_{0.8}Co_{0.1}Mn_{0.1}$, $Ni_{0.83}Co_{0.12}Mn_{0.05}$, $Ni_{0.89}Co_{0.055}Al_{0.055}$, $Ni_{0.91}Co_{0.045}Al_{0.045}$ and $Ni_{0.85}Co_{0.1}Mn_{0.05}$.

The electrode active material provided in step (a) is usually free from conductive carbon, that means that the conductive carbon content of starting material is less than 1% by weight, referring to said starting material, preferably 0.001 to 1.0 % by weight.

Some elements are ubiquitous. In the context of the present invention, traces of ubiquitous metals such as sodium, calcium, iron or zinc, as impurities will not be taken into account in the description of the present invention. Traces in this context will mean amounts of 0.02 mol-% or less, referring to the total metal content of the starting material.

In step (b), said electrode active material provided in step (a) is treated with an aqueous medium, preferably with water. Said aqueous medium may have a pH value in the range of from 2 up to 14, preferably at least 3.5, more preferably from 5 to 7. The pH value is measured at the beginning of step (b). It is observed that in the course of step (b), the pH value raises to at least 10, for example 11 to 13. In embodiments wherein the pH value is in the range of from 10 to 11 at the beginning of step (b) it raises to more than 11 to up to 13. In embodiments wherein the pH value is in the range of 3 to below 10 at the beginning of step (b) it raises to 11 to up to 13 in the course of step (b).

It is preferred that the water hardness of said aqueous medium used in step (b) is at least partially removed, especially calcium. The use of desalinized water is preferred.

Said aqueous medium contains a compound selected from compounds of Al or Sb selected from AlOOH, $Al_2O_3$, $Al_2(SO_4)_3$, and $Sb_2O_3$, dissolved or slurried.

In one embodiment of the present invention, the amount of compound of Al or Sb is in the range of from 0.05 to 1.5 mol-%, preferably 0.15 to 0.9 mol-%, referring to TM.

Examples of compounds of Al or Sb used in step (b) are selected from water-soluble and water-insoluble compounds. A water-soluble compound of Al is $Al_2(SO_4)_3$. "Water-soluble" in this context means a solubility of at least 10 g Al or Sb, respectively, compound/l water at 25°C.

In other embodiments, said inorganic compound of Al is water-insoluble. "Water-insoluble" in this context means a solubility of less than 0.1 g compound of Al/l water at 25°C. Examples are AlOOH and $Al_2O_3$.

A compound of Sb is $Sb_2O_3$.

Said water-insoluble compound of Al or Sb may be dispersed or slurried in water.

In the context of the present invention, AlOOH does not necessarily bear equal molar amounts of oxide and hydroxide and is sometimes also named as Al(O)(OH). The same applies *mutatis mutandis* to SbOOH.

Compounds of Al or Sb, respectively, and especially $Al_2O_3$ and Al(O)(OH) used in step (b) may be pure ($\geq$ 99.9 mole% Al, referring to total metals including Si) or doped with oxides such as $La_2O_3$, $Ce_2O_3$, titania or zirconia, in amounts of for example 0.1 to 5 mole%.

More preferred compounds of Al and Sb in step (b) are $Al_2(SO_4)_3$ and $Sb_2O_3$.

In one embodiment of the present invention, said water-insoluble compound of Al or Sb has an average particle diameter (D50) in the range of from 10 nm to 10 $\mu$m, preferably 10 nm to 3 $\mu$m. The average diameter (D50) may be determined by imaging processes such as SEM.

In another embodiment, said aqueous medium does not contain any of heteropoly acids or the respective lithium or ammonium salts nor compounds of Al or Sb, neither dissolved nor slurried.

In one embodiment of the present invention, step (b) is performed at a temperature in the range of from 5 to 85°C, preferred are 10 to 60°C.

In one embodiment of the present invention, step (b) is performed at normal pressure. It is preferred, though, to perform step (b) under elevated pressure, for example at 10 mbar to 10 bar above normal pressure, or with suction, for example 50 to 250 mbar below normal pressure, preferably 100 to 200 mbar below normal pressure.

Step (b) may be performed, for example, in a vessel that can be easily discharged, for example due to its location above a filter device. Such vessel may be charged with starting material followed by introduction of aqueous medium. In another embodiment, such vessel is charged with aqueous medium followed by introduction of starting material. In another embodiment, starting material and aqueous medium are introduced simultaneously.

In one embodiment of the present invention, in step (b), the amounts of water and electrode active material have a weight ratio in the range of from 1:5 to 5:1, preferably from 2:1 to 1:2.

Step (b) may be supported by mixing operations, for example shaking or in particular by stirring or shearing, see below.

In one embodiment of the present invention, step (b) has a duration in the range of from 1 minute to 90 minutes, preferably 1 minute to less than 60 minutes. A duration of 5 minutes or more is possible in embodiments wherein in step (b), water treatment and water removal are performed overlapping or simultaneously.

In one embodiment of the present invention, treatment according to step (b) and water removal according to step (c) are performed consecutively.

After or during the treatment with an aqueous medium in accordance to step (b), water may be removed by any type of filtration, for example on a band filter or in a filter press.

In one embodiment of the present invention, at the latest 5 minutes after commencement of step (b), step (c) is started. Step (c) includes partially removing the water from treated particulate material, for example by way of a solid-liquid separation, for example by decanting or preferably by filtration. Said "partial removal" may also be referred to as partially separating off.

In one embodiment of step (c), the slurry obtained in step (b) is discharged directly into a centrifuge, for example a decanter centrifuge or a filter centrifuge, or on a filter device, for example a suction filter or in a filter press or in a belt filter that is located preferably directly below the vessel in which step (b) is performed. Then, filtration is commenced.

In a particularly preferred embodiment of the present invention, steps (b) and (c) are performed in a filter press or in a filter device with stirrer, for example a pressure filter with stirrer or a suction filter with stirrer (German for example: "Rührfilternutsche"). At most 5 minutes after, preferably at most 3 minutes after - or even immediately after - having combined starting material and aqueous medium in accordance with step (b), removal of aqueous medium is commenced by starting the filtration. On laboratory scale, steps (b) and (c) may be performed on a Büchner funnel, and steps (b) and (c) may be supported by manual stirring.

In a preferred embodiment, step (b) is performed in a filter device, for example a stirred filter device that allows stirring of the slurry in the filter or of the filter cake.

In one embodiment of the present invention, the water removal in accordance to step (c) has a duration in the range of from 1 minute to 1 hour.

In one embodiment of the present invention, stirring in step (b) - and (c), if applicable - is performed with a rate in the range of from 1 to 50 revolutions per minute ("rpm"), preferred are 5 to 20 rpm. In other embodiments, it is 200 to 400 rpm.

In one embodiment of the present invention, filter media may be selected from ceramics, sintered glass, sintered metals, organic polymer films, non-wovens, and fabrics.

In one embodiment of the present invention, steps (b) and (c) are carried out under an atmosphere with reduced $CO_2$ content, e.g., a carbon dioxide content in the range of from 0.01 to 500 ppm by weight, preferred are 0.1 to 50 ppm by weight. The $CO_2$ content may be determined by, e.g., optical methods using infrared light. It is even more preferred to perform steps (b) and (c) under an atmosphere with a carbon dioxide content below detection limit for example with infrared-light based optical methods.

From step (c), a solid residue is obtained, preferably in the form of a wet filter cake. The moisture content of the solid residue and especially of the filter cake may be in the range of from 3 to 20 % by weight, preferably 4 to 9 % by weight.

In an optional step (d), water or solvent is removed at least partially from the mixture obtained from step (d), for example by evaporation. In a preferred embodiment of step (d), the water is evaporated at least partially at a temperature in the range of from 40 to 250°C. Preferably, water evaporation is performed at 0.1 to 10 mbar ("in vacuum").

In step (e), at least one compound selected from compounds of B or Al or Sb to the solid material obtained from step (d), if applicable, or from step (c), respectively, thereby depositing at least one element selected from Al, Sb, or B on the surface of said particulate electrode active material, wherein the element deposited in step (e) is different from the element deposited in steps (b) or (d). Such compound may be added as a slurry or solution or as dry powder, preferred are dry powders.

Thus, step (e) is performed on the solid material obtained from step (d) if a step (d) is performed. In embodiments wherein no step (d) is performed, step (e) is performed on the mixture obtained from step (c) if applicable. In embodiments wherein no step (d) is performed, step (e) is performed on the solid material obtained from step (c).

Examples of compounds of aluminum added in step (e) are found below, water-insoluble compounds of Al and compounds of B being preferred.

Examples of compounds of boron are $B_2O_3$, boric acid ($B(OH)_3$) and lithium borates, for example $LiBO_2$. Boric acid is preferred.

In one embodiment of the present invention, said water-insoluble aluminum compound has an average particle diameter (D50) in the range of from 200 nm to 5 $\mu$m, preferably 2 to 5 $\mu$m, dispersed in water and determined by X-ray diffraction.

Examples of compounds of antimony are compounds of Sb(+III) and of Sb(+V). Examples of compounds of Sb(+III) are $Sb(OH)_3$, $Sb_2O_3 \cdot aq$, and $Sb_2O_3$.

In one embodiment of the present invention, the compound of B or Al or Sb is in the range of from 0.05 to 1.5 mol-%, preferably 0.15 to 0.9 mol-%, referring to TM.

When performing step (e), the selection of compound of Sb or Al or B or heteropoly acid is made in a way that by performing step (e) at least one element selected from Al, Sb, and B is deposited on the surface of said particulate electrode active material, and wherein the element deposited in step (e) is different from the element deposited in step (b)

and (d).

In one embodiment of the present invention, the at least one compound of Al or B or Sb is added as a particulate solid, for example as a dry powder. Especially in embodiments wherein a step (d) has been performed step (e) is performed by adding compound of Al or B or Sb as a dry powder. "Dry powder" refers to a residual moisture content of 0.1% by weight or less, determined by Karl-Fischer titration.

Step (e) may be supported by mixing operations, for example shaking or in particular by stirring or shearing or milling, see below.

In one embodiment of the present invention, step (e) has a duration in the range of from 1 minute to 60 minutes, preferably 1 minute to less than 30 minutes. A duration of 5 minutes or more is possible in embodiments wherein in step (e), water treatment and water removal are performed overlapping or simultaneously.

In one embodiment of the present invention, step (e) is preferred at a temperature in the range of from 10 to 80°C. Even more preferred is ambient temperature.

In one embodiment of the present invention, step (e) is performed in an air atmosphere, or under an inert gas such as nitrogen. Ambient air is preferred.

In one embodiment of the present invention, steps (c) to (f) are performed in the same type of vessel, for example in a filter device with stirrer, for example a pressure filter with stirrer or a suction filter with stirrer.

The inventive process includes a subsequent step (f):

(f) thermal treatment of the material obtained from step (e).

Said step (f) is particularly preferred in embodiments wherein said compound(s) of Al or B or Sb are added as aqueous slurry or aqueous solution.

Step (f) may be carried out in any type of oven, for example a roller hearth kiln, a pusher kiln, a rotary kiln, a pendulum kiln, or - for laboratory scale trials - in a muffle oven.

The temperature of the thermal treatment according to step (f) may be in the range of from 150 to 900°C, preferably 250 to 700°C and even more preferably from 300 to 650°C. Said temperature refers to the maximum temperature of step (f).

Without wishing to be bound by any theory, it is assumed that by the performance of step (f), compound of boron may react with residual lithium compounds to a lithium-B compound, e.g., $LiBO_2$. In addition, it is assumed that any aluminum compound is transferred into $Al_2O_3$, and lithium is extracted from $Li_{1+x}TM_{1-x}O_2$ to yield $Li_{1+x1}TM_{1-x1}O_2$ and NiOOH, x1 being in the range of from -0.02 to +0.03.

In one embodiment of the present invention, the temperature is ramped up before reaching the desired temperature of from 150 to 900°C, preferably 250 to 700°C. For example, first the mixture of step (e) is heated to a temperature to 350 to 550°C and then held constant for a time of 10 min to 4 hours, and then it is raised to 500 to 900°C, preferably 500 to 850°C.

In one embodiment of the present invention, the heating rate in step (f) is in the range of from 0.1 to 10 °C/min.

In one embodiment of the present invention, step (f) is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment of the present invention, step (f) is performed in an oxygen-containing atmosphere, for example in a nitrogen-air mixture, in a rare gas-oxygen mixture, in air, in oxygen or in oxygen-enriched air or in pure oxygen. In a preferred embodiment, the atmosphere in step (f) is selected from air, oxygen and oxygen-enriched air. Oxygen-enriched air may be, for example, a 50:50 by volume mix of air and oxygen. Other options are 1:2 by volume mixtures of air and oxygen, 1:3 by volume mixtures of air and oxygen, 2:1 by volume mixtures of air and oxygen, and 3:1 by volume mixtures of air and oxygen. Pure oxygen is even more preferred.

In one embodiment of the present invention, step (f) has a duration in the range of from 30 minutes to 5 hours. Preferred are 60 minutes to 4 hours. The cooling time is neglected in this context.

By carrying out the inventive process, electrode active materials are obtained with excellent electrochemical properties. Without wishing to be bound by any theory, we assume that the decomposition products of a combination of compounds of B or Sb or Al - as the case may be - may lead to scavenging lithium compounds deposited at the surface of the electrode active material.

Cathode active materials obtained by the inventive process have numerous advantages. Cathodes made from such cathode active materials display a reduced resistance growth upon cycling.

A further aspect of the present invention is directed towards coated cathode active materials, hereinafter also referred to as inventive cathode active materials. Inventive cathode active materials a core according to general formula $Li_{1+x1}TM_{1-x1}O_2$, wherein TM is a combination of metals according to general formula (I), and x1 is in the range of from -0.02 to 0.03, and having a shell that comprises

- $LiBO_2$ or $B(OH)_3$ and

- NiOOH and
- $Al_2O_3$.

In one embodiment of the present invention, TM is a combination of metals according to general formula (I) with a + b + c = 1 and

$$(Ni_aCo_bMn_c)_{1-d}M^1{}_d \qquad (I)$$

a being in the range of from 0.6 to 0.99, preferably from 0.75 to 0.95, more preferably from 0.85 to 0.95,

b being zero or in the range of from 0.01 to 0.2, preferably from 0.025 to 0.2, more preferably from 0.025 to 0.1,

c being in the range of from zero to 0.2, preferably from 0.025 to 0.2, more preferably from 0.05 to 0.1,

d being in the range of from zero to 0.1, preferably from zero to 0.04,

$M^1$ is at least one of Al, Mg, Ti, Nb, Mo, W and Zr, preferably at least one of Al, Ti, Zr and W.

In one embodiment of the present invention, the variable c is zero, $M^1$ is Al, and d is in the range of from 0.01 to 0.05.
In one embodiment of the present invention TM corresponds to general formula (I) and x is in the range from zero to 0.2, preferably from zero to 0.1 and even more preferably 0.01 to 0.05.
Inventive cathode active materials further comprise a shell. Said shell comprises

a lithium-boron oxide compound or $B(OH)_3$
and a nickel oxyhydroxide, preferably NiOOH,
and an aluminum oxide compound or a compound of Sb, preferably an aluminum oxide compound.

Said nickel oxyhydroxide may be detected by X-ray diffraction.
In one embodiment df the present invention, the molar ratio of Al and B in the shell of inventive cathode active materials is in the range of from 1:10 to 3:1, preferably 1:7 to 2:3.
In one embodiment df the present invention, the shell of inventive cathode active materials has a thickness in the range of from 2 to 10 nm, determined by time of flight-secondary ion mass spectroscopy ("TOF-SIMS").
A further aspect of the present invention are electrodes comprising at least one inventive cathode active material. They are particularly useful for lithium ion batteries. Lithium ion batteries comprising at least one electrode according to the present invention exhibit a very good discharge and cycling behavior, and they show good safety behavior.
In one embodiment of the present invention, inventive cathodes contain

(A) at least one inventive cathode active material, as described above,
(B) carbon in an electrically conductive state, and
(C) a binder,
(D) a current collector.

In a preferred embodiment of the present invention, inventive cathodes contain

(A) 80 to 98 % by weight cathode active inventive material,
(B) 1 to 17 % by weight of carbon,
(C) 1 to 10 % by weight of binder,

percentages referring to the sum of (A), (B) and (C).
Cathodes according to the present invention contain carbon in electrically conductive modification, in brief also referred to as carbon (B). Carbon (B) can be selected from soot, active carbon, carbon nanotubes, graphene, and graphite. Carbon (B) can be added as such during preparation of electrode materials according to the invention.
Electrodes according to the present invention can comprise further components. They can comprise a current collector (D), such as, but not limited to, an aluminum foil. They further comprise a binder material (C), hereinafter also referred to as binder (C). Current collector (D) is not further described here.
Suitable binders (C) are preferably selected from organic (co)polymers. Suitable (co)polymers, i.e., homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are also suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopolyethylene, but also copolymers of ethylene which comprise at least 50 mol% of copolymerized ethylene and up to 50 mol% of at least one further comonomer, for example $\alpha$-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol% of copolymerized propylene and up to 50 mol% of at least one further comonomer, for example ethylene and $\alpha$-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and $\alpha$-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight $M_w$ in the range from 50,000 to 1,000,000 g/mol, preferably to 500,000 g/mol.

Binder (C) may be cross-linked or non-cross-linked (co)polymers.

In a particularly preferred embodiment of the present invention, binder (C) is selected from halogenated (co) polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive electrodes may comprise 3 to 10% by weight of binder(s) (d), referring to the sum of component (a), component (b) and carbon (c).

A further aspect of the present invention is a battery or electrochemical cell containing

(1) at least one cathode comprising inventive cathode active material (A), carbon (B), and binder (C),
(2) at least one anode, and
(3) at least one electrolyte.

Embodiments of cathode (1) have been described above in detail.

Anode (2) may contain at least one anode active material, such as carbon (graphite), $TiO_2$, lithium titanium oxide, silicon or tin. Anode (2) may additionally contain a current collector, for example a metal foil such as a copper foil.

Electrolyte (3) may comprise at least one non-aqueous solvent, at least one electrolyte salt and, optionally, additives.

Nonaqueous solvents for electrolyte (3) can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$alkylene glycols and in particular polyethylene glycols. Polyethylene glycols can here comprise up to 20 mol% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at

least 400 g/mol.

The molecular weight $M_w$ of suitable polyalkylene glycols and in particular suitable polyethylene glycols can be up to 5,000,000 g/mol, preferably up to 2,000,000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds of the general formulae (II) and (III)

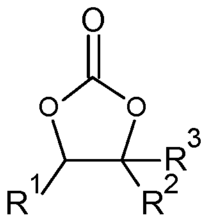

(II)

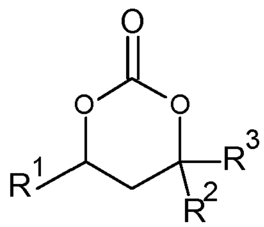

(III)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen.

Another preferred cyclic organic carbonate is vinylene carbonate, formula (IV).

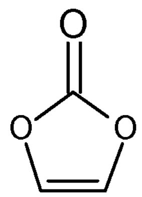

(IV)

The solvent or solvents is/are preferably used in the water-free state, i.e. with a water content in the range from 1 ppm to 0.1% by weight, which can be determined, for example, by Karl-Fischer titration.

Electrolyte (3) further comprises at least one electrolyte salt. Suitable electrolyte salts are, in particular, lithium salts. Examples of suitable lithium salts are $LiPF_6$, $LiBF_4$, $LiClO_4$, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$ and salts of the general formula $(C_nF_{2n+1}SO_2)_tYLi$, where m is defined as follows:

t = 1, when Y is selected from among oxygen and sulfur,
t = 2, when Y is selected from among nitrogen and phosphorus, and
t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

In a preferred embodiment of the present invention, electrolyte (3) contains at least one flame retardant. Useful flame retardants may be selected from trialkyl phosphates, said alkyl being different or identical, triaryl phosphates, alkyl dialkyl phosphonates, and halogenated trialkyl phosphates. Preferred are tri-$C_1$-$C_4$-alkyl phosphates, said $C_1$-$C_4$-alkyls being different or identical, tribenzyl phosphate, triphenyl phosphate, $C_1$-$C_4$-alkyl di- $C_1$-$C_4$-alkyl phosphonates, and fluorinated tri-$C_1$-$C_4$-alkyl phosphates,

In a preferred embodiment, electrolyte (3) comprises at least one flame retardant selected from trimethyl phosphate, $CH_3$-P(O)$(OCH_3)_2$, triphenylphosphate, and tris-(2,2,2-trifluoroethyl)phosphate.

Electrolyte (3) may contain 1 to 10% by weight of flame retardant, based on the total amount of electrolyte.

In an embodiment of the present invention, batteries according to the invention comprise one or more separators (4) by means of which the electrodes are mechanically separated. Suitable separators (4) are polymer films, in particular porous polymer films, which are unreactive toward metallic lithium. Particularly suitable materials for separators (4) are polyolefins, in particular film-forming porous polyethylene and film-forming porous polypropylene.

Separators (4) composed of polyolefin, in particular polyethylene or polypropylene, can have a porosity in the range from 35 to 45%. Suitable pore diameters are, for example, in the range from 30 to 500 nm.

In another embodiment of the present invention, separators (4) can be selected from among PET nonwovens filled with inorganic particles. Such separators can have a porosity in the range from 40 to 55%. Suitable pore diameters are, for example, in the range from 80 to 750 nm.

Batteries according to the invention can further comprise a housing which can have any shape, for example cuboidal or the shape of a cylindrical disk. In one variant, a metal foil configured as a pouch is used as housing.

Batteries according to the invention provide a very good discharge and cycling behavior, in particular at high temperatures (45 °C or higher, for example up to 60 °C) in particular with respect to the capacity loss.

Batteries according to the invention can comprise two or more electrochemical cells that combined with one another, for example can be connected in series or connected in parallel. Connection in series is preferred. In batteries according to the present invention, at least one of the electrochemical cells contains at least one electrode according to the invention. Preferably, in electrochemical cells according to the present invention, the majority of the electrochemical cells contain an electrode according to the present invention. Even more preferably, in batteries according to the present invention all the electrochemical cells contain electrodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The invention is further illustrated by working examples.

General remarks: N-methyl-2-pyrrolidone: NMP.

Ultra-dry air: dehumidified air, dew point of less than -30°C, and $CO_2$ content less than 50 ppm "in vacuo": 0.1 to 10 mbar

## I. Synthesis of a cathode active material

### I.1 Synthesis of precursors

#### I.1.1 Synthesis of a precursor TM-O.1

A stirred tank reactor was filled with deionized water and 6 g of ammonia solution per kg of water. The solution was tempered to 55 °C and a pH value of 11.8 was adjusted by adding an aqueous sodium hydroxide solution.

The co-precipitation reaction was started by simultaneously feeding an aqueous transition metal sulfate solution and aqueous sodium hydroxide solution through a coaxial nozzle at a flow rate ratio of 1.97, and a total flow rate resulting in an average residence time of 5 hours. The transition metal solution contained Ni, Co and Mn at a molar ratio of 91 : 4.5 : 4.5 and a total transition metal concentration of 1.65 mol/kg. The aqueous sodium hydroxide solution was a 25 wt.% sodium hydroxide solution and 25 wt.% ammonia solution in a weight ratio of ~11. The pH value was kept at 11.8 by the separate feed of an aqueous sodium hydroxide solution. Beginning with the start-up of all feeds, suspension was continuously overflowing. The mixed transition metal (TM) oxyhydroxide precursor TM-OH.1 was obtained by filtration of the resulting suspension, washing with sodium hydroxide and distilled water, drying at 135°C. The dried precursor TM-OH.1 was further dehydrated at 475 °C to produce TM-O.1.

#### I.1.2 Synthesis of a precursor TM-OH.2

A stirred tank reactor was filled with deionized water and 20 g of ammonium sulfate per kg of water. The solution was warmed to 55 °C and its pH value of 12 was adjusted by adding an aqueous sodium hydroxide solution.

The co-precipitation reaction was started by simultaneously feeding an aqueous transition metal sulfate solution and aqueous sodium hydroxide solution at a flow rate ratio of 1.97, and a total flow rate resulting in an average residence time of 5 hours. The transition metal solution contained Ni, Co and Mn at a molar ratio of 88 : 7 : 5 and a total transition metal concentration of 1.65 mol/kg. The aqueous sodium hydroxide solution was a 25 wt.% sodium hydroxide solution and 25 wt.% ammonia solution in a weight ratio of ~17:1. The pH value was kept at 12 by the separate feed of an aqueous sodium hydroxide solution. Beginning with the start-up of all feeds, a continuous overflow of suspension was started. The mixed

transition metal (TM) oxyhydroxide precursor TM-OH.2 was obtained by filtration of the resulting suspension), washing with sodium hydroxide and distilled water, drying at 120°C in air and sieving.

I.2 Conversion of TM-O.1 and of TM-OH.2 into cathode active materials

I.2.1 Manufacture of a base cathode active material, B-CAM.1, step (a.1)

I.2.1.1 Synthesis of base cathode active material B-CAM.1, step (a.1) from TM-O.1

An amount of 2.5 kg precursor TM-O.1 was mixed with 1.48 kg LiOH monohydrate, 35 g $Al_2O_3$, 8 g $TiO_2$ and 13 g $ZrO_2$ for 15 minutes in a grinding mill or high shear mixer. A saggar was charged with the resultant mixture and transferred into a muffle furnace The temperature was raised at rate of 2 C/min to 765 °C under flowing oxygen and then held constant at 765 °C for 8 hours and subsequently allowed to naturally cool under flowing oxygen. The resultant powder was then deagglomerated in a grinding mill, further deagglomerated in air classifier mill and sieved through a 325 mesh screen. After de-agglomeration, the resultant powder had an average particle diameter (D50) of 11 μm.

I.2.1.2 Synthesis of base cathode active material B-CAM.4, step (a.2) from TM-O.1

An amount of 2.5 kg precursor TM-O.1 was mixed with 1.48 kg LiOH monohydrate, 21 g $Al_2O_3$ and 13 g $ZrO_2$ for 15 minutes in a grinding mill or high shear mixer. A saggar was charged with the resultant mixture and transferred into a muffle furnace The temperature was raised at rate of 2 C/min to 765 °C under flowing oxygen and then held constant at 765 °C for 8 hours and subsequently allowed to naturally cool to ambient temperature under flowing oxygen. The resultant powder was then deagglomerated in a grinding mill and sieved through a 325 mesh screen. After de-agglomeration, the powder had an average particle diameter (D50) of 11 μm.

I.2.1.3 Synthesis of base cathode active material B-CAM.7, step (a.3) from TM-OH.2

2.7 kg dried precursor TM-OH.2 was mixed with 1.29 kg LiOH monohydrate, 8 g $Al_2O_3$, 4 g $TiO_2$ and 9 g $ZrO_2$ for 15 minutes in a grinding mill or high shear mixer. A saggar was charged with the resultant mixture and transferred into a muffle furnace The temperature was raised at rate of 1.2 C/min to 770 °C under flowing oxygen and then held constant at 770 °C for 10.5 hours and subsequently allowed to naturally cool under flowing oxygen. The resultant powder was then deagglomerated in a grinding mill and sieved through a 325 mesh screen. After de-agglomeration, the resultant powder had an average particle diameter (D50) of 11 μm.

I.2.2 Manufacture cathode active materials, Steps (b) to (f)

I.2.2.1 Synthesis of C-CAM.2

Step (b.1): A beaker was charged with 67 ml of de-ionized water. An amount of 100 g B-CAM.1 was added. The resultant slurry was stirred at ambient temperature over a period of 10 minutes, during said stirring the slurry temperature was maintained at 25°C.

Step (c.1): Then, the water was removed by filtration through a filter press. A wet filter cake remained.

Step (d.1): The resultant filter cake was dried in ultra-dry air at 120°C for 10 hours.

Step (e.1): Then, 0.57 g (0.9 mol) boric acid were added and mixing was performed in a high speed mixer at 25.000 rpm. A mixture was obtained.

Step (f.1): The resulting mixture was thermally treated at 300°C for 2 hours in a muffle furnace and in a forced flow of oxygen. Then, by sieving the resultant powder with a mesh 45 μm sieve, comparative cathode active material C-CAM.2 was obtained.

I.2.2.2 Synthesis of CAM.3

Step (b.2): An amount of 100 g B-CAM.1 was slurried in de-ionized water (conductivity of water less than 5 μS/m) under constant stirring. An aqueous solution of 0.3 mol-% $Al_2(SO_4)_3$ with respect to TM in B-CAM.1 was added. The total amount of de-ionized water used is 67 ml. The resultant slurry was stirred at ambient temperature over a period of 10 minutes.

Step (c.2): Then, the water was removed by filtration through a filter press. A wet filter cake remained.

Step (d.2): The resultant filter cake was dried in ultra-dry air at 120°C for 10 hours.

Step (e.2): Then, 0.57 g (0.9 mol) boric acid were added and mixing was performed in a high speed mixer at

25.000 rpm. A mixture was obtained.

Step (f.2): The resulting mixture was thermally treated at 300°C for 2 hours in a muffle furnace and in a forced flow of oxygen. Then, by sieving the resultant powder with a mesh 45 μm sieve, inventive cathode active material CAM.3 was obtained.

1.2.2.3 Manufacture of C-CAM.5

Step (b.3): A beaker was charged with 67 ml of de-ionized water. An amount of 100 g B-CAM.4 was added. The resultant slurry was stirred at ambient temperature over a period of 10 minutes, during said stirring the slurry temperature was maintained at 25°C.

Step (c.3): Then, the water was removed by filtration through a filter press. A wet filter cake remained.

Step (d.3): The resultant filter cake was dried *in UDA* at 120°C for 10 hours.

Step (e.3): Then, 0.57 g (0.9 mol) boric acid were added and mixing was performed in a high speed mixer at 25.000 rpm. A mixture was obtained.

Step (f.3): The resulting mixture was thermally treated at 300°C for 2 hours in a muffle furnace and in a forced flow of oxygen. Then, by sieving the resultant powder with a mesh 45 μm sieve, comparative cathode active material C-CAM.5 was obtained.

I.2.2.4 Synthesis of CAM.6

Step (b.4): An amount of 100 g B-CAM.4 was slurried in de-ionized water (conductivity of water less than 5 μS/m) under constant stirring. An aqueous solution of 0.3 mol-% $Al_2(SO_4)_3$ with respect to TM in B-CAM.4 was added. The total amount of de-ionized water used is 67 ml. The resultant slurry was stirred at ambient temperature over a period of 10 minutes.

Step (c.4): Then, the water was removed by filtration through a filter press. A wet filter cake remained.

Step (d.4): The resultant filter cake was dried in ultra-dry air at 120°C for 10 hours.

Step (e.4): Then, 0.57 g (0.9 mol) boric acid were added and mixing was performed in a high speed mixer at 25.000 rpm. A mixture was obtained.

Step (f.4): The resulting mixture was thermally treated at 300°C for 2 hours in a muffle furnace and in a forced flow of oxygen. Then, by sieving the resultant powder with a mesh 45 μm sieve, inventive cathode active material CAM.6 was obtained.

1.2.2.5 Manufacture of C-CAM.8

Step (b.5): A beaker was charged with 67 ml of de-ionized water. An amount of 100 g B-CAM.7 was added. The resultant slurry was stirred at ambient temperature over a period of 10 minutes, during said stirring the slurry temperature was maintained at 25°C.

Step (c.5): Then, the water was removed by filtration through a filter press. A wet filter cake remained.

Step (d.5): The resultant filter cake was dried in ultra-dry air *AIR* at 120°C for 10 hours.

Step (e.5): Then, 0.57 g (0.9 mol) boric acid were added and mixing was performed in a high speed mixer at 25.000 rpm. A mixture was obtained.

Step (f.5): The resulting mixture was thermally treated at 300°C for 2 hours in a muffle furnace and in a forced flow of oxygen. Then, by sieving the resultant powder with a mesh 45 μm sieve, comparative cathode active material C-CAM.8 was obtained.

I.2.2.6 Synthesis of CAM.9

Step (b.6): An amount of 100 g B-CAM.7 was slurried in de-ionized water (conductivity of water less than 5 μS/m) under constant stirring. An aqueous solution of 0.3 mol-% $Al_2(SO_4)_3$ with respect to TM in B-CAM.7 was added. The total amount of de-ionized water used is 67 ml. The resultant slurry was stirred at ambient temperature over a period of 10 minutes.

Step (c.6): Then, the water was removed by filtration through a filter press. A wet filter cake remained.

Step (d.6): The resultant filter cake was dried in ultra-dry air at 120°C for 10 hours.

Step (e.6): Then, 0.57 g (0.9 mol) boric acid were added and mixing was performed in a high speed mixer at 25.000 rpm. A mixture was obtained.

Step (f.6): The resulting mixture was thermally treated at 300°C for 2 hours in a muffle furnace and in a forced flow of oxygen. Then, by sieving the resultant powder with a mesh 45 μm sieve, inventive cathode active material CAM.9 was obtained.

The results are summarized in Table 1.

Table 1: Manufacturing details and compositions of CAM

| CAM | Compound added in step (b), mol-% vs. TM | Step (d), [°C] | Compound added in step (e), mol-% vs. TM | Step (f), [°C] |
|---|---|---|---|---|
| B-CAM.1 | none | none | none | none |
| C-CAM.2 | none | 120°C | 0.9% $H_3BO_3$ | 300°C |
| CAM.3 | 0.3 % $Al_2(SO_4)_3$ | 120°C | 0.9% $H_3BO_3$ | 300°C |
| B-CAM.4 | none | none | none | none |
| C-CAM.5 | none | 120°C | 0.9% $H_3BO_3$ | 300°C |
| CAM.6 | 0.3 % $Al_2(SO_4)_3$ | 120°C | 0.9% $H_3BO_3$ | 300°C |
| B-CAM.7 | none | none | none | none |
| C-CAM.8 | none | 120°C | 0.9% $H_3BO_3$ | 300°C |
| CAM.9 | 0.3 % $Al_2(SO_4)_3$ | 120°C | 0.9% $H_3BO_3$ | 300°C |

Inventive cathode active materials each had a shell that comprised an aluminum compound, a boron compound (191.8 eV) and NiOOH. The NiOOH could be detected in XP spectra (855.8eV).

II. Testing of Cathode Active Material

II.1 Electrode manufacture

II.1.1 Electrode manufacture, general procedure 1

Positive electrode: PVDF binder (Solef® 5130) was dissolved in NMP (Merck) to produce a 8.0 wt.% solution. For electrode preparation, binder solution (2.5 wt.%), and carbon black (Li400, 2.5 wt.-%) were suspended in NMP. After mixing using a planetary centrifugal mixer (ARE-250, Thinky Corp.; Japan), either any of inventive cathode active material CAM.3 or CAM:.6, or a base cathode active material B-CAM.1 or B-CAM.4, or a comparative cathode active material C-CAM.2 or C-CAM.5 (95 wt.%) was added and the suspension was mixed again to obtain a lump-free slurry. The solid content of the slurry was adjusted to 65%. The slurry was coated onto Al foil using a KTF-S roll-to-roll coater (Mathis AG). Prior to use, all electrodes were calendared. The thickness of cathode material was 43 μm, corresponding to 15 mg/cm$^2$. All electrodes were dried at 120°C for 7 hours before battery assembly.

II.1.2 Electrode manufacture, general procedure 2

Positive electrode: PVDF binder (Solef® 5130) was dissolved in NMP (Merck) to produce a 8.0 wt.% solution. For electrode preparation, binder solution (4 wt.%), and carbon black (Li250, 3.5 wt.-%) were suspended in NMP. After mixing using a planetary centrifugal mixer (ARE-250, Thinky Corp.; Japan), either any of inventive CAM.9 or a base cathode active material B-CAM.7 or a comparative cathode active material C-CAM.8, (92.5 wt.%) was added and the suspension was mixed again to obtain a lump-free slurry. The solid content of the slurry was adjusted to 65%. The slurry was coated onto Al foil using a KTF-S roll-to-roll coater (Mathis AG). Prior to use, all electrodes were calendared. The thickness of cathode material was 48 μm, corresponding to 15 mg/cm$^2$. All electrodes were dried at 120°C for 7 hours before battery assembly.

II.2 Electrolyte Manufacture

Base electrolyte compositions were prepared according to the below Table 2.

Table 2: Base electrolyte compositions

| | $LiPF_6$ [%] | ethylene carbonate [%] | ethyl methyl carbonate [%] | dimethyl carbonate [%] |
|---|---|---|---|---|
| EL.1 | 11.8 | 44.1 | - | 44.1 |

(continued)

| | $LiPF_6$ [%] | ethylene carbonate [%] | ethyl methyl carbonate [%] | dimethyl carbonate [%] |
|---|---|---|---|---|
| EL.2 | 12.7 | 26.2 | 61.1 | - |
| With respect to the solvents, % refer to % by volume | | | | |

II.3 Test cell Manufacture

II.3.1 Manufacture of test cells based on B-CAM.1, C-CAM.2, CAM, 3, B-CAM.4, C-CAM.5, or CAM.6

Coin-type half cells (20 mm in diameter and 3.2 mm in thickness) comprising a cathode prepared as described under II.1 and lithium metal as working and counter electrode, respectively, were assembled and sealed in an Ar-filled glove box. In addition, the cathode and anode and a separator were superposed in order of cathode // separator // anode to produce a coin-type half-cell. Thereafter, 0.15 mL of EL.1 were introduced into the coin cell.

II.3.2 Manufacture of test cells based on B-CAM.7, C-CAM.8, or CAM, 9

Coin-type half cells (20 mm in diameter and 3.2 mm in thickness) comprising a cathode prepared as described under III. 1.2 and lithium metal as working and counter electrode, respectively, were assembled and sealed in an Ar-filled glove box. In addition, the cathode and anode and a separator were superposed in order of cathode // separator // Li foil to produce a half coin cell. Thereafter, 0.15 mL of EL.2 which is described above (II.2) were introduced into the coin cell.

III. Evaluation of coin-type half-cell performance

III.1.1 Cycle tests with coin-type half cells based on B-CAM.1, C-CAM.2, CAM.3, B-CAM.4, C-CAM.5, and CAM.6

Cell performance was evaluated using the produced coin type battery. For the battery performances, initial capacity and reaction resistance of cell were measured. The initial performance and cycle were measured as follows: Coin half cells according to II.3.1 were tested in a voltage range between 4.3 V to 2.7 V at ambient temperature. For the initial cycles, the initial lithiation was conducted in the CC-CV mode, i.e., a constant current (CC) of 0.5 C was applied until reaching 0.05 C. After 10 min resting time, reductive lithiation was carried out at constant current of 0.05 C up to 2.7 V. The results are summarized in Table 3. For the cycling, the current density was 0.33 C and charge and discharge were repeated 50 times.

III.1.2 Cycle tests with coin-type half-cell for B-CAM.7, C-CAM.8, or CAM, 9

Cell performance was evaluated using the produced coin type battery. For the battery performances, initial capacity and reaction resistance of cell were measured. The initial performance and cycle were measured as follows: Coin half cells according to II.3.1 were tested in a voltage range between 4.35 V to 2.8 V at ambient temperature. For the initial cycles, the initial lithiation was conducted in the CC-CV mode, i.e., a constant current (CC) of 0.2 C was applied until reaching 0.01 C. After 10 min resting time, reductive lithiation was carried out at constant current of 0.2 C up to 2.8 V. The results are summarized in Table 3. For the cycling, the current density was 0.5C charge and 1.0C discharge were repeated 50 times.

The cell reaction resistance growth was calculated by the following method:
After the 25 cycles under 0.1C, the coin cells are recharged to 4.3V, and the resistance is measured again by the electrochemical impedance spectroscopy (EIS) method. The ratio of the resistance value of $26^{th}$ cycle and second cycle is defined as the resistance growth. The results are summarized in Table 3. [%] relative resistance growth is based on the resistance growth of cell based on C-CAM.8 as 100%.

Table 3: Initial charge and discharge capacity with initial reaction resistance, coin cell

| CAM | $1^{st}$ discharge capacity [mA·h/g] | Q50/Q1 [%] | Relative R (resistance) $2^{nd}$ cycle [%] | Relative R (resistance) $26^{th}$ cycle [%] | Relative R growth R26th/R2nd [%] |
|---|---|---|---|---|---|
| B-CAM.1 | 210 | 85 | 22 | 17 | 78 |
| C-CAM.2 | 222 | 92 | 100 | 70 | 70 |

(continued)

| CAM | 1st discharge capacity [mA·h/g] | Q50/Q1 [%] | Relative R (resistance) 2nd cycle [%] | Relative R (resistance) 26th cycle [%] | Relative R growth R26th/R2nd [%] |
|---|---|---|---|---|---|
| CAM.3 | 225 | 95 | 65 | 34 | 51 |
| B-CAM.4 | 216 | 81 | 27 | 28 | 103 |
| C-CAM.5 | 227 | 90 | 100 | 100 | 100 |
| CAM.6 | 227 | 92 | 66 | 49 | 74 |
| B-CAM.7 | 196 | 95 | 34 | 26 | 78 |
| C-CAM.8 | 208 | 96 | 100 | 100 | 100 |
| CAM.9 | 209 | 97 | 65 | 35 | 54 |

## Claims

**1.** Process for the manufacture of a coated cathode active material comprising the steps of

(a) providing a particulate electrode active material according to general formula $Li_{1+x}TM_{1-x}O_2$, wherein TM is a combination of metals according to general formula (I),

$$(Ni_aCo_bMn_c)_{1-d}M_d \qquad (I)$$

with

a being in the range of from 0.86 to 0.94,
b being zero or in the range of from 0.01 to 0.1,
c being in the range of from 0.01 to 0.1, and
d being in the range of from zero to 0.1,
M is at least one of Al, Mg, Nb, Ti, Mo, W and Zr, and

$$a + b + c = 1,$$

and x is in the range of from zero to 0.05,

(b) treating said particulate electrode active material with an aqueous medium that contains a compound of Al or Sb selected from AlOOH, $Al_2O_3$, $Al_2(SO_4)_3$, and $Sb_2O_3$,
(c) removing the water from step (b) at least partially,
(d) optionally, treating the mixture from step (c) thermally,
(e) adding at least one compound selected from

compounds of Al selected from $Al_2O_3$, $Al(OH)_3$, AlOOH, $Al_2O_3$·aq, or
Sb selected from $Sb(OH)_3$, $Sb_2O_3$·aq, $Sb_2(SO_4)_3$, SbOOH, $LiSbO_2$, $Sb_2O_3$, $Sb_2O_5$, $LiSb_3O_8$, $LiSbO_3$, $Li_3SbO_4$, $Li_5SbO_5$, $Li_7SbO_6$, $Sb_2O_4$ (Sb(III)Sb(V)$O_4$), and oxyhydroxides of Sb(+V), or
B selected from $B_2O_3$, boric acid and lithium borates,
to the solid material obtained from step (d), if applicable, or from step (c), respectively, thereby depositing at least one element selected from on the surface of said particulate electrode active material, wherein the element deposited in step (e) is different from the element deposited in step (b), respectively, and

(f) treating the residue obtained from step (e) thermally.

**2.** Process according to claim 1 wherein step (f) includes a calcination step at a maximum temperature in the range of from 300 to 700°C.

**3.** Process according to claim 1 or 2 wherein step (f) includes a drying step at a maximum temperature in the range of from

40 to 250°C.

4. Particulate cathode active material having a core electrode active material according to general formula $Li_{1+x1}TM_{1-x1}O_2$, wherein TM is a combination of metals according to general formula (I)

$$(Ni_aCo_bMn_c)_{1-d}M_d \qquad (I)$$

with

a being in the range of from 0.86 to 0.94,
b being zero or in the range of from 0.01 to 0.1,
c being in the range of from 0.01 to 0.1, and
d being in the range of from zero to 0.1,
M is at least one of Al, Mg, Nb, Ti, Mo, W and Zr, and
a + b + c = 1, and x1 is in the range of from -0.02 to 0.03, and having a shell that comprises
a lithium-boron oxide compound or $B(OH)_3$
and a nickel oxyhydroxide
and an aluminum oxide compound or a compound of Sb.

5. Cathode active material according to claim 4 wherein the molar ratio of Al and B in the shell is in the range of from 1:10 to 3:1.

6. Cathode active material according to any of claims 4 or 5 wherein the shell has a thickness in the range of from 2 to 10 nm, determined by time of flight-secondary ion mass spectroscopy.

7. Cathode comprising

(A) at least one cathode active material according to any of the claims 4 to 6,
(B) carbon in an electrically conductive state, and
(C) a binder.

8. Cathode according to claim 7 comprising

(A) 80 to 98 % by weight cathode active inventive material,
(B) 1 to 17 % by weight of carbon,
(C) 1 to 10 % by weight of binder,

percentages referring to the sum of (A), (B) and (C).

9. Battery or electrochemical cell containing

(1) at least one cathode according to claim 7 or 8,
(2) at least one anode, and
(3) at least one electrolyte.

**Patentansprüche**

1. Verfahren zur Herstellung eines beschichteten kathodenaktiven Materials, bestehend aus den Schritten

(a) Bereitstellung eines teilchenförmigen Elektroden-Aktivmaterials gemäß der allgemeinen Formel $Li_{1+x}TM_{1-x}O_2$, wobei TM eine Kombination von Metallen gemäß der allgemeinen Formel (I) ist,

$$(Ni_aCo_bMn_c)_{1-d}M_d \qquad (I)$$

Wobei:

a ist im Bereich von 0,86 bis 0,94,

b ist null oder liegt im Bereich von 0,01 bis 0,1,
c liegt im Bereich von 0,01 bis 0,1, und
d liegt im Bereich von null bis 0,1,
M ist mindestens eines von Al, Mg, Nb, Ti, Mo, W und Zr, und

$$a + b + c = 1,$$

und x liegt im Bereich von null bis 0,05,

(b) Behandlung des Elektroden-Aktivmaterials mit einem wässrigen Medium, das eine Verbindung aus Al oder Sb enthält, die aus AlOOH, $Al_2O_3$, $Al_2(SO_4)_3$ und Sb2O3 ausgewählt wurde,
(c) zumindest teilweise Entfernung des Wassers aus Schritt (b),
(d) optional wird das Gemisch von Schritt (c) thermisch behandelt,
(e) Hinzufügen von mindestens einer Verbindung, die ausgewählt wurde aus Verbindungen von Al, ausgewählt aus $Al_2O_3$, $Al(OH)_3$, AlOOH, $Al_2O_3 \cdot aq$ oder

Sb ausgewählt $Sb(OH)_3$, $Sb_2O_3 \cdot aq$, $Sb_2(SO_4)_3$, SbOOH, $LiSbO_2$, $Sb_2O_3$, $Sb_2O_5$, $LiSb_3O_8$, $LiSbO_3$, $Li_3SbO_4$, $Li_5SbO_5$, $Li_7SbO_6$, $Sb_2O_4$ (Sb(III)Sb(V)$O_4$) und Oxyhydroxiden von Sb(+V), oder
B ausgewählt aus $B_2O_3$, Borsäure und Lithiumboraten,
auf das feste Material, das aus Schritt (d), falls zutreffend, oder aus Schritt (c) erhalten wird, wodurch mindestens ein ausgewähltes Element auf der Oberfläche des aktiven Materials der partikelmäßigen Elektrode abgelagert wird, wobei das in Schritt (e) abgelagerte Element sich von dem im Schritt (b) abgelagerten Element unterscheidet, und

(f) die aus Schritt (e) gewonnene Reste thermisch behandelt.

**2.** Prozess gemäß Anspruch 1, bei dem Schritt (f) einen Kalzinationsschritt bei einer maximalen Temperatur im Bereich von 300 bis 700°C umfasst.

**3.** Verfahren gemäß Anspruch 1 oder 2, wobei Schritt (f) einen Trocknungsschritt bei einer Höchsttemperatur im Bereich von 40 bis 250°C umfasst.

**4.** Partikelkathoden-aktives Material mit einem Kernelektroden-Aktivmaterial gemäß der allgemeinen Formel $Li_{1+x}TM_{1-x}O_2$, wobei TM eine Kombination von Metallen gemäß der allgemeinen Formel (I) ist

$$(Ni_aCo_bMn_c)_{1-d}M_d \quad (I)$$

mit

ein Wesen im Bereich von 0,86 bis 0,94,
b ist null oder liegt im Bereich von 0,01 bis 0,1,
c liegt im Bereich von 0,01 bis 0,1, und
d liegt im Bereich von null bis 0,1,
M ist mindestens eines von Al, Mg, Nb, Ti, Mo, W und Zr, und
a + b + c = 1, und x1 liegt im Bereich von -0,02 bis 0,03 und hat eine Schale, die aus eine Lithium-Boroxid-Verbindung oder $B(OH)_3$
und ein Nickel-Oxyhydroxid
und eine Aluminiumoxidverbindung oder eine Verbindung aus Sb.

**5.** Kathode ist aktives Material gemäß Anspruch 4, wobei das molare Verhältnis von Al und B in der Schale im Bereich von 1:10 bis 3:1 liegt.

**6.** Kathodenaktives Material gemäß einem der Ansprüche 4 oder 5, bei dem die Schale eine Dicke im Bereich von 2 bis 10 nm hat, bestimmt durch Flugzeit-Sekundärionen-Massenspektroskopie.

**7.** Kathode bestehend aus

(A) mindestens ein kathodenaktives Material gemäß einer der Behauptungen 4 bis 6,

(B) Kohlenstoff im elektrisch leitfähigen Zustand, und
(C) Ein Ordner.

8. Kathode gemäß Behauptung 7 besteht aus

(A) 80 bis 98 % nach Gewicht Kathode aktives erfinderisches Material,
(B) 1 bis 17 % nach Gewicht des Kohlenstoffs,
(C) 1 bis 10 % nach Gewicht des Binders,

Prozentsätze beziehen sich auf die Summe von (A), (B) und (C).

9. Batterie oder elektrochemische Zelle, die enthält

(1) Mindestens eine Kathode laut Behauptung 7 oder 8,
(2) mindestens eine Anode, und
(3) Mindestens einen Elektrolyten.

**Revendications**

1. Procédé de fabrication d'un matériau actif à cathode revêtue, comprenant les étapes de

(a) fournissant un matériau actif d'électrode particulaire selon la formule générale $Li_{1+x}TM_{1-x}O_2$, où TM est une combinaison de métaux selon la formule générale (I),

$$(Ni_aCo_bMn_c)_{1-d}M_d \quad (I)$$

avec

a étant dans l'intervalle 0,86 à 0,94,
b étant zéro ou dans l'intervalle de 0,01 à 0,1,
c se situant dans l'intervalle de 0,01 à 0,1, et
d étant dans l'intervalle de zéro à 0,1,
M est au moins l'un des Al, Mg, Nb, Ti, Mo, W et Zr, et

$$a + b + c = 1,$$

et x est dans l'intervalle de zéro à 0,05,

(b) traiter le matériau actif de l'électrode particulaire avec un milieu aqueux contenant un composé d'Al ou de Sb sélectionné parmi AlOOH, $Al_2O_3$, $Al2(SO4)_3$ et $Sb_2O_3$,
(c) en retirant l'eau de l'étape (b) au moins partiellement,
(d) En option, en traitant le mélange de l'étape (c) thermiquement,
(e) Ajouter au moins un composé sélectionné parmi

composés d'Al sélectionnés parmi $Al_2O_3$, $Al(OH)_3$, AlOOH, $Al_2O_3 \cdot aq$, ou
Sb sélectionné parmi $Sb(OH)_3$, $Sb_2O_3 \cdot aq$, $Sb_2(SO_4)_3$, SbOOH, $LiSbO_2$, $Sb_2O_3$, $Sb_2O_5$, $LiSb_3O_8$, $LiSbO_3$, $Li_3SbO_4$, $Li_5SbO_5$, $Li_7SbO_6$, $Sb_2O_4$ (Sb(III)Sb(V)$O_4$), et oxyhydroxydes de Sb(+V), ou
B sélectionné à partir de $B_2O_3$, acide borique et borates de lithium,
au matériau solide obtenu de l'étape (d), si applicable, ou de l'étape (c), respectivement, déposant ainsi au moins un élément sélectionné sur la surface de ladite particule d'électrode active, où l'élément déposé à l'étape (e) est différent de l'élément déposé à l'étape (b), respectivement, et

(f) traitement thermique des résidus obtenus à l'étape (e).

2. Le procédé selon la revendication 1 inclut une étape de calcination à une température maximale comprise entre 300 et 700°C.

3. Le procédé selon la revendication 1 ou 2 inclut une étape de séchage à une température maximale comprise entre 40 et 250°C.

4. Matériau actif à cathode particulaire possédant un noyau d'électrode actif selon la formule générale $Li_{1+x}TM_{1-x}O_2$, où TM est une combinaison de métaux selon la formule générale (I)

$$(Ni_aCo_bMn_c)_{1-d}M_d \qquad (I)$$

avec

Un être dans la plage de 0,86 à 0,94,
b étant zéro ou dans l'intervalle de 0,01 à 0,1,
c se situant dans l'intervalle de 0,01 à 0,1, et
d étant dans l'intervalle de zéro à 0,1,
M est au moins l'un des Al, Mg, Nb, Ti, Mo, W et Zr, et
A + B + C = 1, et x1 est dans l'intervalle de -0,02 à 0,03, avec une coquille qui comprend un composé d'oxyde de lithium-bore ou $B(OH)_3$
et un (oxy)hydroxyde de nickel
et un composé d'oxyde d'aluminium ou un composé de Sb.

5. Matière active cathodique selon la revendication 4, où le rapport molaire d'Al et B dans la coquille est de 1:10 à 3:1.

6. Matière active cathodique selon l'une des revendications 4 ou 5, où la coque a une épaisseur allant de 2 à 10 nm, déterminée par le temps de la spectroscopie de masse ionique secondaire en vol.

7. Cathode comprenant

(A) au moins un matériel actif cathodique selon l'une des revendications 4 à 6,
(B) le carbone à l'état électriquement conducteur, et
(C) un classeur.

8. La cathode selon la revendication 7 comprenant

(A) 80 à 98 % en poids de matière active de cathode inventive,
(B) 1 à 17 % en poids de carbone,
(C) 1 à 10 % en poids du liant,

des pourcentages faisant référence à la somme de (A), (B) et (C).

9. Batterie ou cellule électrochimique contenant

(1) au moins une cathode selon la revendication 7 ou 8,
(2) au moins une anode, et
(3) au moins un électrolyte.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8993051 B
- JP 4789066 B
- JP 5139024 B
- US 20150372300 A